# FASCICULE DE BREVET EUROPEEN

(11) **EP 0 718 188 B1**
(45) Date de publication et mention de la délivrance du brevet: **19.05.1999**
(21) Numéro de dépôt: 95402884.1
(22) Date de dépôt: 20.12.1995
(51) Int. Cl.: B64C 27/605, B64C 27/33

(54) **Rotor sans articulation à anneaux intermédiaires de commande de pas**
Gelenkloser Rotor mit Zwischenringen für die Steuerung der Blattverstellung
Hingeless rotor with intermediate rings for pitch control

(30) Priorité: 22.12.1994 FR 9415472
(43) Date de publication de la demande: 26.06.1996
(73) Titulaire: EUROCOPTER, F-13725 Marignane Cédex (FR)
(72) Inventeur: Legendre, Philippe Maurice Renée, F-13450 Grans (FR); Manfredotti, Thomas Pierre Louis, F-13510 Eguilles (FR); Antomarchi, Philippe Maurice Paul, F-13006 Marseille (FR)
(74) Mandataire: Bérogin, Francis

(56) Documents cités:
- FR-A- 2 416 840
- GB-A- 1 109 552

## Description

L'invention se rapporte à un rotor du type dit "sans articulation", pouvant être un rotor principal (sustentateur) ou anti-couple (arrière), pour un aéronef à voilure tournante tel qu'un hélicoptère, le rotor étant équipé, pour chaque pale, d'un anneau intermédiaire pour commander le pas collectif et cyclique de cette pale.

On connait de nombreuses réalisations de rotor sans articulation, du type comprenant :
- un mât rotor entraîné en rotation autour d'un axe du rotor,
- un moyeu solidaire en rotation du mât,
- au moins deux pales dont chacune est, d'une part, reliée au moyeu par une partie d'emplanture comprenant au moins un bras torsible autour d'un axe longitudinal de changement de pas de la pale, et, d'autre part, munie d'une manchette rigide en torsion, entourant le bras torsible, et dont la partie radiale externe, par rapport à l'axe du rotor, est solidaire en torsion de la pale et du bras torsible autour de l'axe de pas, tandis que sa partie radiale interne entoure sans contact le bras torsible et présente un levier de pas en saillie vers l'extérieur de la manchette, et relié à une bielle de commande de pas. Cette dernière est, en général, manoeuvrée sensiblement dans la direction de l'axe du rotor par un mécanisme d'actionnement relié aux commandes de vol actionnées par le pilote.

Chaque pale peut être individuellement reliée au moyeu par sa partie d'emplanture, raccordée à un ou aux longeron(s) de la pale, ou constituant un prolongement radial interne de ce ou ces longerons, comme décrit dans le brevet américain US-4,690,616, concernant un rotor principal sans articulation.

Mais il est aussi possible que la partie d'emplanture de chaque pale soit une portion d'une lame commune à deux pales opposées, dont cette lame constitue ou prolonge les longerons, comme décrit à titre d'exemple dans le brevet français FR 2 285 298, relatif à un rotor anti-couple d'hélicoptère. Dans un tel rotor, la lame, formant les longerons flexibles de deux pales opposées et dont chacun est entouré d'une coque profilée pour former la pale correspondante, est encastrée par sa partie médiane entre deux plateaux de moyeu fixés sur un arbre rotor, et la commande du pas des pales est obtenue par la torsion de la lame sur une fraction de sa longueur, à l'emplanture de chaque pale au moyeu.

Dans le cas d'un rotor principal, le mécanisme d'actionnement de la bielle de commande de pas est en général un mécanisme à plateaux cycliques, comportant un plateau tournant entraîné en rotation avec le rotor, par exemple à l'aide d'au moins un compas articulé, d'une part, sur le plateau tournant, et, d'autre part, sur le moyeu ou sur le mât rotor, la bielle de commande de pas de chaque pale étant articulée sur ce plateau tournant, monté en rotation sur un plateau non tournant, sollicité par des actionneurs, tels que des vérins de servo-commande, le reliant à une structure non tournante de l'hélicoptère, et le mécanisme à plateaux cycliques comprenant également des moyens de guidage en translation des deux plateaux, parallèlement à l'axe du rotor, et des moyens de guidage d'inclinaison des deux plateaux par rapport à l'axe du rotor.

Ces moyens de guidage en translation et en inclinaison peuvent être réalisés selon deux variantes connues, et comporter des moyens formant rotule, pour guider l'inclinaison des deux plateaux sur l'axe du rotor, et soit un coulisseau, coulissant axialement autour d'un manchon non tournant entourant le mât rotor, comme décrit dans le brevet français FR 2 119 828, soit des colonnettes, parallèles à l'axe du rotor, et disposées autour du mât rotor, comme décrit dans le brevet allemand DE 36 03 400, pour constituer les moyens de guidage en translation des deux plateaux.

Pour un rotor anti-couple, le mécanisme d'actionnement de la bielle de commande de pas peut être un mécanisme à plateau araignée, comportant autant de bras que le rotor comporte de pales, ce plateau araignée étant commandé en translation coaxialement au mât rotor, dont il est solidaire en rotation, et chaque bras du plateau araignée étant relié au levier de pas de la pale correspondante par l'intermédiaire de la bielle de commande de pas, de manière à assurer la commande collective du pas des pales par la commande de la position axiale du plateau araignée par rapport au mât rotor. Un tel mécanisme d'actionnement pour la commande collective du pas des pales du rotor arrière est par exemple décrit dans les brevets américains US-3,594,097 et US-4,626,173 de la demanderesse.

Dans les rotors sans articulation du type mentionné ci-dessus, et tels que décrits, à titre d'exemple, dans les brevets précités US-4,690,616 et FR 2 285 298, chaque manchette rigide en torsion transmet la commande du pas de la pale correspondante entre le levier de pas, sollicité par la bielle de commande de pas correspondante, et la pale. Afin que le déplacement de la bielle de commande de pas se traduise effectivement par une torsion du bras torsible correspondant et une rotation de la pale autour de son axe de pas, il est connu d'installer au moins un palier d'appui entre la manchette et la partie d'emplanture de la pale, comme proposé par exemple dans US-4,690,616, ou le moyeu, comme proposé dans FR 2 285 298, pour que le ou les paliers d'appui reprennent un effort tranchant provenant de la bielle de commande de pas, articulée au levier de pas en un point relativement excentré par rapport à l'axe de pas de la pale, puisque situé à l'extérieur de la manchette, le plus souvent en avant de cette dernière, du côté du bord d'attaque de la pale, mais parfois aussi en arrière de la manchette, du côté du bord de fuite.

Dans ces réalisations, dans lesquelles le bras torsible comprend souvent au moins une lame en matériau composite à matrice organique, en général thermodurcissable, armée de fibres longitudinales de renfort, minérales ou organiques, et constitue le plus souvent simultanément un bras flexible, autorisant les mouvements de battement et de traînée de la pale, les moyens formant palier d'appui entre, d'une part, la manchette, et, d'autre part, le moyeu ou la partie d'emplanture de la pale correspondante sont des moyens de palier autorisant cinq degrés de liberté, afin de reprendre les efforts provenant de la bielle de commande de pas correspondante.

Lorsque le bras torsible est d'une faible épaisseur (dans la direction de l'axe du rotor), comme cela est généralement le cas d'une lame en matériaux composites, le ou les paliers d'appui sont généralement réalisés à l'aide de rotules auto-lubrifiantes (voir US-4,690,616), sollicitées axialement par les tolérances de fabrication et l'allongement des bras torsibles sous l'effet de forces centrifuges sollicitant les pales, ce qui conduit à une usure rapide des rotules et pose un problème de fiabilité, et/ou à l'aide de paliers lamifiés, comprenant au moins un plot de matière visco-élastique entre deux armatures rigides, ce qui conduit à une solution pénalisante en terme de coûts, et, éventuellement, dans les deux cas, de maintenance lorsque l'inspection de la rotule ou du palier lamifié est rendue difficile par le fait qu'elle ou il est monté(e) à l'intérieur de la manchette, comme proposé dans FR 2285298 et DE 3 241 754.

Par contre, lorsque les bras torsibles et flexibles sont de forte épaisseur, et présentent une structure telle que décrite en particulier dans le brevet US-3,669,566 et fabriquée par un procédé tel que décrit dans le brevet FR 2 474 395, c'est-à-dire avec une partie centrale de structure composite ternaire comprenant un faisceau de fibres ou baguettes longitudinales, individuellement enveloppées et agglomérées par un élastomère vulcanisé assurant un rappel élastique en position initiale de repos, et telles que chaque fibre ou baguette est elle-même constituée d'un faisceau d'un grand nombre de filaments agglomérés par une résine thermodurcissable polymérisée, l'ensemble ayant une section transversale éventuellement de forme ovale aplatie dans le plan de rotation du rotor et étant éventuellement enveloppé dans une gaine souple inextensible, on sait que les solutions présentées ci-dessus de palier d'appui à rotule classique ou lamifiée en élastomère ne sont pas applicables.

Le but de l'invention est de proposer un rotor sans articulation équipé d'un dispositif de commande de pas qui permet de s'affranchir des inconvénients précités, et convient mieux que ceux connus aux diverses exigences de la pratique, et en particulier grâce auquel la commande de pas est obtenue par l'introduction de moments et d'efforts tranchants réduits dans les manchettes rigides en torsion.

Un autre but de l'invention est de proposer un rotor sans articulation avec un dispositif de commande de pas qui soit fiable, durable, économique, tant à la fabrication qu'au montage, et d'une maintenance facilitée.

A cet effet, le rotor sans articulation selon l'invention, tel que défini ci-dessus, se caractérise en ce qu'il comprend, pour chaque pale, un anneau intermédiaire de commande de pas, qui est rigide en torsion autour de l'axe de pas correspondant, qui entoure le bras torsible correspondant et qui est disposé sensiblement entre le moyeu et la partie radiale interne de la manchette correspondante, auxquels l'anneau est relié par deux rotules dont une première l'articule sur le moyeu et la seconde l'articule sur la manchette.

Dans un tel rotor, le dispositif de commande de pas avec anneau intermédiaire pour chaque pale, procure effectivement cinq degrés de liberté à la manchette correspondante, dont il bloque la translation parallèlement à l'axe du rotor.

Lors de la mise en pas d'une pale, le déplacement appliqué sur le levier de pas correspondant par traction ou compression dans la bielle de commande de pas entraîne un pivotement de la manchette par rapport à l'anneau intermédiaire autour d'un axe, sensiblement parallèle à l'axe de pas, et simultanément un pivotement, autour d'un autre axe sensiblement parallèle à l'axe de pas, de l'anneau intermédiaire par rapport au moyeu, et de sorte que le centre de la manchette reste pratiquement confondu avec le centre du bras torsible, lorsque ce dernier présente une raideur importante en traînée, qui ramène le centre de la manchette au centre du bras torsible dans le plan de rotation du rotor.

Avantageusement, pour limiter les couplages pas-battement et pas-traînée, le plan médian de l'anneau, perpendiculairement à son axe, est sensiblement perpendiculaire à l'axe de pas de la pale correspondante, et, de préférence, passe par l'axe de battement correspondant ou à proximité de ce dernier.

Avantageusement de plus, afin d'équilibrer sensiblement les charges dans les liaisons de l'anneau intermédiaire, chacune des deux rotules est retenue sur l'anneau dans l'une respectivement de deux positions sensiblement opposées l'une de l'autre par rapport au centre de l'anneau.

Lorsque chaque bras torsible a sensiblement la forme d'une lame de section transversale dont la plus grande dimension est sensiblement perpendiculaire aux axes du rotor et de pas de la pale correspondante, afin de présenter une raideur en traînée importante, il est avantageux, pour limiter l'encombrement et améliorer la distribution des contraintes, qu'au moins la partie radiale interne de la manchette correspondante et l'anneau intermédiaire correspondant présentent chacun une section transversale sensiblement ovale à grand axe sensiblement perpendiculaire aux axes du rotor et de pas correspondant. Les deux rotules de liaison de l'anneau intermédiaire peuvent alors être centrées sensiblement sur le petit axe de la section transversale de cet anneau.

Afin que le dispositif de commande de pas d'un tel rotor reste facilement compatible avec les mécanismes connus d'actionnement des bielles de commande de pas (mécanismes à plateaux cycliques pour un rotor principal ou mécanisme à plateau araignée pour un rotor anti-couple, comme définis ci-dessus), chaque bielle de commande de pas est avantageusement articulée sur une extrémité du levier de pas correspondant qui est en saillie latérale par rapport à une extrémité du grand axe de la section transversale de la manchette dans sa partie radiale interne.

Afin de charger les deux rotules de manière sensiblement égale, il est avantageux que la bielle de commande de pas soit articulée sur le levier de pas par une troisième rotule, centrée sensiblement dans le plan rotor, passant par l'axe de pas et perpendiculaire à l'axe rotor, ce plan pouvant être le plan médiateur du segment s'étendant entre les centres des deux rotules de liaison de l'anneau intermédiaire. Cependant, dans une telle réalisation, il existe non seulement un léger couplage pas-battement, restant acceptable compte tenu de la plage de pas et dû au léger déplacement du centre de la manchette selon l'axe du rotor, mais également un léger couplage pas-traînée, qui peut être favorable dans certains cas.

Dans un mode de réalisation avantageusement simple à monter et entretenir, pour chaque pale, l'anneau intermédiaire porte deux pattes en saillie sensiblement radiales vers l'extérieur de l'anneau dans deux directions opposées, et dans chacune desquelles est montée l'une respectivement des deux rotules de liaison de l'anneau, les deux rotules étant centrées sensiblement dans le plan médian de l'anneau et retenues chacune par un axe transversal, la première dans une chape en saillie radiale latérale au-dessus du moyeu (c'est-à-dire du côté opposé au mât rotor), et la seconde dans une chape en saillie sous la manchette (c'est-à-dire du côté du mât rotor).

Pour limiter le coût du dispositif de commande de pas de chaque pale, chaque rotule de liaison de l'anneau est d'un type autorisant un débattement angulaire maximum limité des pivotements relatifs des deux organes qu'elle articule l'un sur l'autre, la somme des débattements angulaires maximum des deux rotules de liaison étant au moins égale à l'amplitude de la plage totale de pas, et, de manière favorable à la fiabilité des rotules, le débattement angulaire maximum limité de chacune d'elles est avantageusement sensiblement égal à la moitié de l'amplitude de la plage totale de pas.

En outre, pour assurer avantageusement l'amortissement en traînée des pales du rotor, ce dernier peut comprendre, pour chaque pale, un second anneau intermédiaire, également rigide en torsion autour de l'axe de pas correspondant, et qui entoure également le bras torsible correspondant et est disposé entre le moyeu et la manchette correspondante, le second anneau étant solidaire d'au moins un amortisseur de trainée de la pale correspondante dans un ensemble articulé d'une part, par une quatrième rotule, sur la manchette correspondante, et, d'autre part, par une cinquième rotule sur un point d'appui, les quatrième et cinquième rotules étant sensiblement centrées dans le plan rotor, passant par l'axe de pas et perpendiculaire à l'axe rotor.

Dans une variante, le point d'appui de l'ensemble second anneau-amortisseur de traînée est un point fixe en repère tournant, sur le moyeu ou le mât rotor. Mais, selon une autre variante, il est également possible que ce point d'appui soit un point fixe sur la manchette d'une autre pale du rotor, en particulier une pale voisine, notamment la pale précédente par rapport au sens de rotation du rotor, dans une architecture dans laquelle l'ensemble second anneau-amortisseur de traînée est monté comme un tirant interpale, uniquement sensible à la traînée différentielle des deux pales adjacentes qu'il relie.

Afin que le second anneau intermédiaire possède une cinématique semblable à celle du premier, relié au moyeu et à la manchette correspondante, pour permettre de limiter l'effet du pas cyclique sur le ou les amortisseurs, le second anneau est avantageusement disposé de sorte que son axe soit sensiblement parallèle au plan rotor et son plan médian, perpendiculairement à son axe, est sensiblement parallèle au plan médian du premier anneau intermédiaire.

En outre, pour une meilleure adaptation dynamique en traînée, l'amortisseur de traînée, ou chacun d'eux, est avantageusement associé à des moyens de rappel élastique en un sous-ensemble constituant un adaptateur de fréquence entre la manchette correspondante et le point d'appui correspondant, sur le moyeu ou mât rotor, ou sur la manchette d'une pale voisine.

Dans un mode de réalisation de structure simple, ledit ensemble articulé comprend, pour chaque pale, un unique amortisseur de traînée, latéralement solidaire du second anneau intermédiaire, lequel est directement articulé sur la manchette par la quatrième rotule, tandis que l'amortisseur est directement articulé sur le point d'appui correspondant par la cinquième rotule, du côté opposé à la quatrième rotule par rapport au centre du second anneau et à sa liaison à l'amortisseur.

Lorsque chaque bras torsible du rotor a sensiblement la forme d'une lame de section transversale dont la plus grande dimension est sensiblement perpendiculaire aux axes du rotor et de pas correspondant, le second anneau a avantageusement une section transversale également sensiblement ovale, à grand axe également sensiblement perpendiculaire aux axes du rotor et de pas correspondant, et sur lequel sont sensiblement centrées les quatrième et cinquième rotules, ainsi favorablement disposées par rapport aux première et seconde rotules centrées sur le petit axe, sensiblement parallèle à l'axe rotor, du premier anneau intermédiaire relié à la manchette et au moyeu.

Lorsque le rotor est tel que, pour chaque pale, le bras torsible est également flexible en battement autour d'un axe fictif de battement sensiblement perpendiculaire à l'axe de pas correspondant et à l'axe rotor, il est de plus avantageux que les première, seconde et troisième rotules, ainsi, le cas échéant, que les quatrième et cinquième rotules, soient centrées sensiblement dans un plan perpendiculaire à l'axe de pas correspondant et passant par ledit axe de battement, ou à proximité d'un tel plan, de façon à limiter autant que possible tout couplage pas-battement.

De même, pour éviter ou limiter les couplages pas-traînée, il est avantageux que les première et seconde rotules soient centrées sensiblement sur ou à proximité de l'axe fictif de traînée de la pale, défini par le bras torsible et flexible dans sa partie d'emplanture. Toutefois, il se fait que les couplages pas/traînée, pas/battement et battement/traînée peuvent être minimisés, ou encore optimisés selon les besoins, en disposant judicieusement les première, seconde et troisième rotules, et en particulier de sorte que les première et seconde rotules soient centrées de part et d'autre de l'axe de traînée, sensiblement à une même distance de cet axe de traînée.

D'autres avantages et caractéristiques de l'invention découleront de la description donnée ci-dessous, à titre non limitatif, d'exemples de réalisation décrits en référence aux dessins annexés sur lesquels :
- la figure 1 est une vue schématique en partie en coupe et en partie en élévation latérale d'un rotor principal sans articulation selon l'invention, limité à une pale,
- la figure 2 est une vue schématique en coupe transversale du rotor de la figure 1 au niveau de l'extrémité radiale interne de la manchette de la seule pale représentée,
- les figures 3 et 4 sont des vues analogues à la figure 2 dans une position de pas différente,
- la figure 5 est une vue analogue à la figure 2 pour une variante de réalisation,
- la figure 6 est une vue partielle en plan d'un rotor principal à cinq pales ayant, pour chaque pale, une architecture analogue aux figures 1 et 2,
- la figure 7 est une vue schématique en coupe partielle du rotor de la figure 6 selon l'axe de pas de l'une des pales,
- les figures 8 et 9 sont des vues en coupe partielle respectivement selon VIII-VIII et IX-IX de la figure 7,
- la figure 10 est une vue schématique en superposition des coupes des figures 8 et 9 pour une position de pas différente de la position initiale, et
- la figure 11 est une autre vue analogue à la figure 2 pour une autre variante.

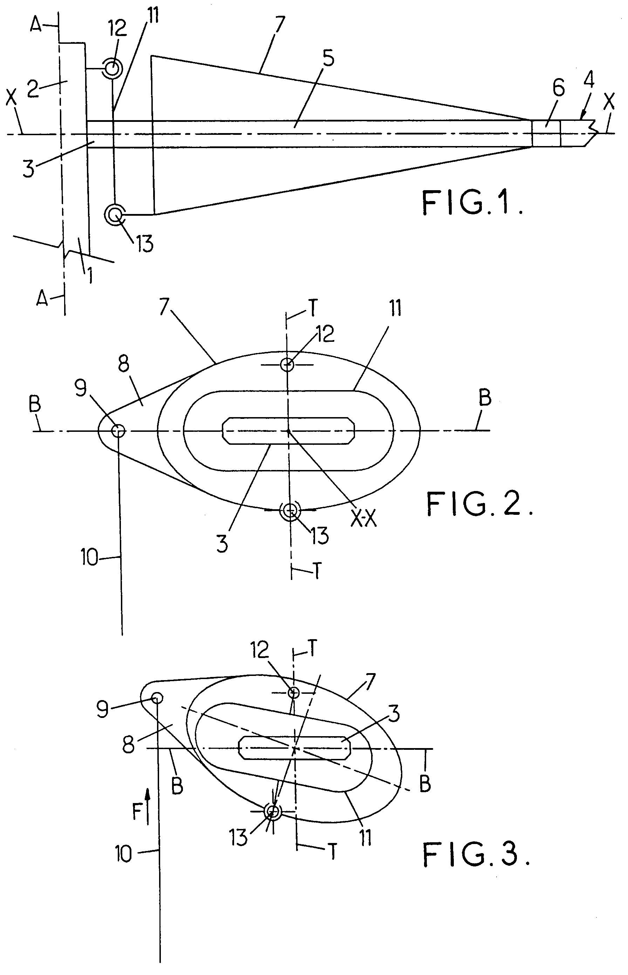

Le rotor principal non articulé pour hélicoptère des figures 1 et 2 comprend un arbre ou mât rotor 1 entraîné par sa base (non représentée sur la figure 1) en rotation autour de l'axe A-A du rotor, et solidaire en rotation, à son extrémité opposée, d'un moyeu 2 (qui, sur la figure 1, est représenté comme étant simplement l'extrémité supérieure du mât 1).

En pratique, ce moyeu 2 peut comprendre deux plateaux superposés et fixés l'un à l'autre en enserrant entre eux les parties centrales, qui se croisent, de lames composites torsibles et flexibles, telles que 3, constituant chacune, de part et d'autre de sa partie centrale encastrée dans le moyeu 2, d'une part, le longeron de l'une de deux pales opposées telles que 4, par sa partie et son extrémité radiales externes par rapport à l'axe A-A, et, d'autre part, la partie d'emplanture 5 de cette même pale 4, par la portion de lame 3 s'étendant entre le pied 6 de la pale 4 et le moyeu 2, en traversant une manchette 7 rigide en torsion, métallique ou en matériau composite.

Chaque pale 4 est ainsi reliée au moyeu 2 par la partie d'emplanture 5 constituée d'un bras torsible autour de l'axe longitudinal X-X de changement de pas de la pale 4, et formé par la partie de lame 3 s'étendant entre le pied de pale 6 et le moyeu 2. A son extrémité radiale externe (par rapport à l'axe du rotor A-A), la manchette 7 est solidaire en torsion, autour de l'axe de pas X-X, du pied de pale 6, de la pale 4 ainsi que du bras torsible 5 qu'elle entoure. Par contre, la partie radiale interne de la manchette 7 entoure sans contact la partie du bras torsible 5 qui est voisine du moyeu 2.

Ce rotor principal sans articulation fonctionne de la façon suivante : les oscillations de chaque pale 4 en battement s'effectuent par flexion du bras 5 torsible et flexible autour d'un axe fictif de battement B-B s'étendant sensiblement dans le plan de rotation des pales 4 (donc sensiblement perpendiculaire à l'axe rotor A-A) et perpendiculaire à l'axe de pas X-X de la pale 4 considérée, en passant par le centre de la lame 3 dans la partie du bras 5 voisine du moyeu 2, et s'étendant entre ce dernier et l'extrémité radiale interne de la manchette 7 ; les oscillations en traînée de chaque pale 4 s'effectuent par flexion du bras 5 correspondant autour d'un axe fictif de traînée T-T qui est parallèle à l'axe rotor A-A et perpendiculaire à l'axe de pas X-X de la pale 4 considérée dans cette même partie du bras 5 s'étendant entre le moyeu 2 et l'extrémité radiale interne de la manchette 7 ; les mouvements de chaque pale 4 en pas sont permis par une torsion du bras 5 autour de l'axe de pas X-X, le changement du pas de la pale 4 étant commandé grâce à un levier de pas 8, en saillie latéralement vers l'extérieur de la manchette 7, du côté du bord d'attaque ou du bord de fuite de la pale 4, sur la partie d'extrémité radiale interne de la manchette 7, et à l'extrémité libre duquel est articulée, par une rotule schématisée en 9, une extrémité d'une bielle 10 de commande de pas, articulée par son autre extrémité à un mécanisme d'actionnement connu, en général à plateaux cycliques, actionné par des commandes pilotes.

Dans cet exemple, la lame 3, constituée de manière connue d'un faisceau de stratifils unidirectionnels de fibres de renfort agglomérées dans une matrice synthétique polymérisée, présente une section transversale sensiblement rectangulaire (voir figure 2), dont la largeur, mesurée dans le plan (de rotation) du rotor et parallèlement à l'axe de battement B-B, est très supérieure à son épaisseur, mesurée parallèlement à l'axe rotor A-A ou à l'axe de traînée T-T, de sorte que la lame 3 présente une raideur importante en traînée.

La manchette 7 présente une forme générale tronconique à petite base (à son extrémité radiale externe) rigidement liée en torsion au pied de pale 6 et à grande base (à son extrémité radiale interne) tournée vers le moyeu 2, à faible distance de ce dernier, et de section transversale de forme ovale, à grand axe sensiblement parallèle à l'axe de battement B-B, en position initiale de pas ou position de repos. La rotule 9, articulant la bielle 10 sur le levier de pas 8, est centrée sur ou à proximité de l'axe de battement B-B, et en saillie latérale par rapport à l'extrémité correspondante du grand axe de la section transversale de la grande base de la manchette 7.

Pour chaque pale 4, le rotor comprend également un anneau intermédiaire 11 de commande de pas, qui est rigide en torsion autour de l'axe de pas X-X, et qui entoure, sans contact au repos, le bras 5 correspondant en étant disposé entre le moyeu 2 et l'extrémité radiale interne de la manchette 7 correspondante. Cet anneau 11 présente également une section transversale (voir figure 2) sensiblement ovale ou oblongue, symétrique, comme celle de la manchette 7, par rapport à ses grand et petit axes, qui sont perpendiculaires entre eux et à son axe central. Au repos, l'axe central de l'anneau 11 est sensiblement confondu avec l'axe central de la manchette 7 et l'axe de pas X-X, correspondant à l'axe central de la lame 3, et les grand et petit axes de la section transversale de l'anneau 11 sont parallèles respectivement aux grand et petit axes de la section transversale de la manchette 7.

L'anneau 11 est disposé de sorte que son plan médian, perpendiculairement à son axe central, est sensiblement perpendiculaire à l'axe de pas X-X de la pale 4, et l'anneau 11 est articulé, d'une part, sur le moyeu 2 par une rotule 12, et, d'autre part, sur l'extrémité radiale interne de la manchette 7 par une autre rotule 13, de préférence identique à la rotule 12, les deux rotules 12 et 13 étant montées sur l'anneau 11 chacune dans l'une respectivement de deux positions diamétralement opposées et symétriques l'une de l'autre par rapport à l'axe central de l'anneau 11, en étant centrées sur le petit axe de sa section transversale, c'est-à-dire sur ou à proximité de l'axe de traînée T-T et dans ou à proximité d'un plan perpendiculaire à l'axe de pas X-X et passant par l'axe de battement B-B correspondant. Ainsi, la rotule 9 articulant la bielle 10 sur le levier de pas 8 est sensiblement centrée dans le plan médiateur du segment reliant les centres des deux rotules 12 et 13 d'articulation de l'anneau 11.

Lors d'une commande de pas exercée par la bielle 10 sur le levier de pas 8 et la manchette 7, par exemple par une compression longitudinale selon la flèche F de la figure 3, dirigée vers le levier 8, ce dernier et la manchette 7 pivotent ensemble, grâce à la rotule 13, par rapport à l'anneau 11 autour d'un axe sensiblement parallèle à l'axe de pas X-X, tandis que simultanément l'anneau 11 pivote, grâce à la rotule 12, par rapport au moyeu 2, autour d'un axe également sensiblement parallèle à l'axe de pas X-X. Chacune des deux rotules identiques 12 et 13 autorise un débattement angulaire maximum limité des pivotements relatifs des deux organes qu'elle articule l'un sur l'autre qui est sensiblement égal, et de préférence légèrement supérieur, à la moitié de l'amplitude de la plage totale de pas, de sorte que la somme des débattements angulaires maximum limités des deux rotules 12 et 13 soit au moins égale à cette amplitude de la plage totale de pas de la pale 4 correspondante.

Le dispositif de commande de pas ainsi réalisé reprend les efforts provenant de la bielle de commande de pas 10 correspondante en autorisant cinq degrés de liberté à la manchette 7, et assure ainsi les mêmes fonctions que les paliers d'appui de l'état de la technique, et notamment accepte les déplacements de la pale 4 en traînée, les déplacements relatifs de la manchette 7 et du bras torsible 5 parallèlement à l'axe X-X de la pale 4, sous l'effet des forces centrifuges, ainsi que le blocage de la manchette 7 en battement, en translation parallèlement à l'axe rotor A-A.

Pour une lame 3 de raideur importante en traînée, le centre de la manchette 7 reste pratiquement confondu avec le centre de la lame 3, c'est-à-dire sur l'axe X-X, la manchette 7 étant ramenée au centre suivant l'axe de battement par la raideur importante en traînée de la lame 3, tandis que le centre de l'anneau 11 est légèrement déplacé en battement (selon l'axe de traînée T-T) et en traînée (selon l'axe de battement B-B), comme représenté sur la figure 3.

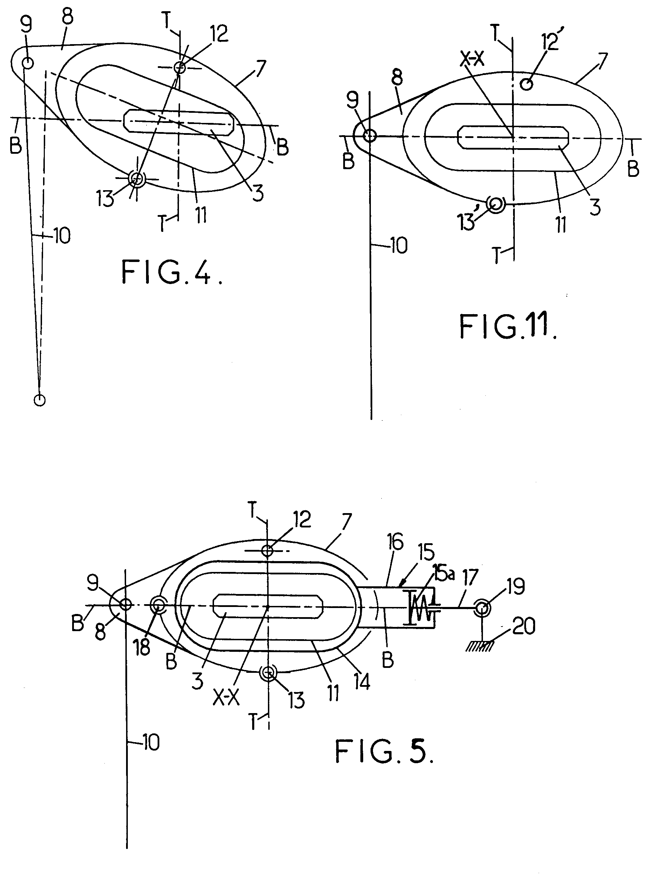

Dans le cas contraire, comme représenté sur la figure 4, le centre de la manchette 7 se déplace, sensiblement avec le centre de l'anneau 11, légèrement parallèlement à l'axe de traînée T-T, ce qui induit un léger couplage pas-battement, qui reste acceptable compte tenu de la plage de pas, et également légèrement parallèlement à l'axe de battement B-B, de sorte qu'il existe un léger couplage pas-traînée qui peut être favorable dans certains cas.

En outre, pour assurer l'amortissement en traînée des pales 4, le rotor comprend également pour chacune d'elles, selon la variante de la figure 5, munie du même agencement de levier de pas 8 que sur la figure 2, un anneau intermédiaire 14 supplémentaire, dont est solidaire un amortisseur de traînée 15.

Le second anneau 14 est également rigide en torsion autour de l'axe de pas X-X correspondant, et entoure également, sans contact au repos, la lame 3 formant le bras torsible 5 correspondant, dans sa partie située entre le moyeu 2 et la manchette 7 correspondante. De plus, le second anneau 14 a également une section transversale ovale ou oblongue, analogue à celle du premier anneau 11, et dont les grand et petit axes sont perpendiculaires à l'axe de pas X-X correspondant et, au repos, respectivement perpendiculaire et parallèle à l'axe rotor A-A ou à l'axe de traînée T-T correspondant. De la sorte, au repos, les grand et petit axes de la section transversale du second anneau 14 sont parallèles avec respectivement les grands et petits axes des sections transversales de la manchette 7 et du premier anneau 11, et l'axe central du second anneau 14 est confondu avec les axes centraux du premier anneau 11, de la manchette 7 et de la lame 3, c'est-à-dire avec l'axe de pas X-X. Le second anneau 14 est disposé de sorte que son plan médian, perpendiculairement à son axe central, est parallèle au plan médian du premier anneau 11.

L'amortisseur de traînée 15 est centré autour du grand axe de la section transversale du second anneau 14 et fixé transversalement par rapport à l'axe de pas X-X et latéralement sur le second anneau 14, en étant solidarisé à une partie cintrée de ce dernier autour d'une extrémité de son grand axe, par une extrémité du corps 16 de l'amortisseur 15, muni d'une tige 17 coulissant par rapport au corps 16 avec amortissement et parallèlement au grand axe de la section du second anneau 14.

La tige 17 peut être solidaire d'un piston coulissant dans le corps 16 cylindrique et coopérant dans ce dernier avec un fluide d'amortissement, comme schématisé sur la figure 5, dans le cas d'un amortisseur 15 à fluide pouvant être de toute structure classique, mais la tige 17 peut également coopérer avec le corps 16 par cisaillement d'au moins une couche ou un plot d'un élastomère visco-élastique.

Dans tous les cas, l'ensemble constitué du second anneau 14 et de l'amortisseur de traînée 15 est articulé, d'une part, directement sur la manchette 7 par une quatrième rotule 18, montée sur le second anneau 14 à l'extrémité du grand axe de sa section transversale, du côté opposé à l'amortisseur de traînée 15, et, d'autre part, sur un point d'appui 20 par une cinquième rotule 19, montée à l'extrémité libre de la tige 17 de l'amortisseur 15, c'est-à-dire à l'extrémité de l'ensemble qui est opposée à la quatrième rotule 18 par rapport au centre du second anneau 14 et au raccordement entre cet anneau 14 et l'amortisseur 15.

Les rotules 18 et 19 sont ainsi centrées dans le plan du rotor (perpendiculaire à l'axe rotor A-A et passant par l'axe de pas X-X), et plus précisément sur le grand axe de la section transversale du second anneau 14, c'est-à-dire sur ou à proximité de l'axe de battement B-B correspondant.

De ce fait, les rotules 9, 12 et 13 comme les rotules 18 et 19 sont centrées sensiblement dans ou à proximité d'un plan perpendiculaire à l'axe de pas X-X correspondant et passant par l'axe de battement B-B correspondant.

On limite ainsi les couplages pas-battement et pas-traînée.

Le point d'appui 20, sur lequel l'amortisseur de traînée 15 s'articule par la rotule 19, est par exemple un point fixe en repère tournant, sur le moyeu 2 ou, éventuellement, sur le mât rotor 1.

En variante, ce point d'appui 20 est un point fixe sur la manchette 7 d'une autre pale 4 du rotor, et en particulier de la pale 4 voisine, qui est soit la pale immédiatement précédente, compte tenu du sens de rotation du rotor, lorsque le levier de pas 8 est en saillie latéralement sur la manchette 7 du côté du bord de fuite de la pale 4 correspondante, soit la pale immédiatement suivante lorsque le levier de pas 8 est en saillie du côté du bord d'attaque de la pale 4.

Dans la variante de la figure 5, le second anneau 14 est monté avec une cinématique semblable à celle du premier anneau 11, ce qui permet de limiter les effets du pas cyclique sur l'amortisseur 15.

En variante, des moyens de rappel élastique 15a, tels qu'un ressort, peuvent être combinés à l'amortisseur de traînée 15 pour former un adaptateur de fréquence, assurant une meilleure adaptation dynamique en traînée, entre le second anneau 14 articulé sur la manchette 7 et le moyeu 2 ou la manchette 7 d'une pale adjacente.

En variante également, un second amortisseur de traînée peut être solidarisé au second anneau 14, symétriquement à l'amortisseur 15, par rapport au centre de l'anneau 14, auquel cas l'ensemble constitué du second anneau 14 et des deux amortisseurs tels que 15 est articulé sur la manchette 7 par la rotule 18 montée à l'extrémité libre de la tige du second amortisseur.

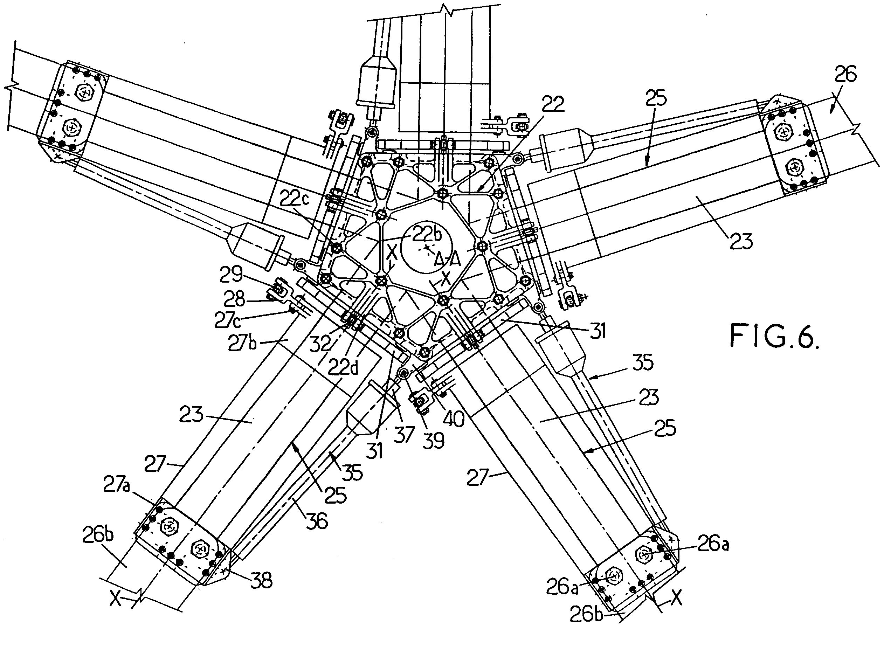

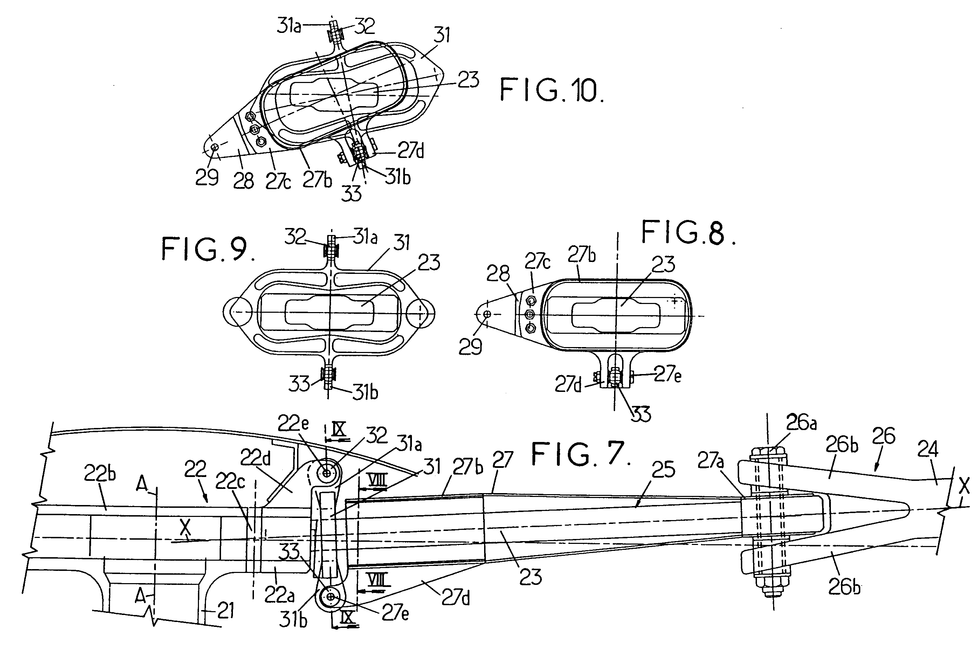

Les figures 6 et 7 représentent partiellement un exemple de rotor principal non articulé à cinq pales d'hélicoptère, comprenant un mât rotor 21, entraîné en rotation par sa base autour de l'axe A-A du rotor, et dont l'extrémité supérieure est d'une seule pièce avec un plateau inférieur 22a d'un moyeu 22, solidaire en rotation du mât 21, et comprenant également un plateau supérieur 22b, de même forme pentagonale que le plateau inférieur 22a. Les deux plateaux 22a et 22b sont superposés et boulonnés l'un vers l'autre, par des ensembles vis-écrou schématisés en 22c, en enserrant entre eux les parties d'extrémité radiales internes (par rapport à l'axe A-A) de lames composites 23, formant chacune un bras torsible et flexible 25, constituant la partie d'emplanture d'une pale 24.

Chaque bras 25 est ainsi encastré par son extrémité radiale interne entre les deux plateaux 22a et 22b du moyeu 22, et son extrémité radiale externe est retenue dans une chape du pied fourchu 26 de la pale 24 correspondante, à l'aide de deux broches de fixation 26a traversant des alésages percés en correspondance dans chacun des deux bras 26b de la chape de pied de pale 26 et dans la lame 23. Eventuellement, l'une des deux broches boulonnées 26a montées côte-à-côte est amovible, pour permettre un "repliage" de la pale 24 par pivotement autour de l'autre broche 26a dans les bras 26b de la chape du pied de pale 26 de retenue de la pale 24 sur son bras 25 d'emplanture sur le moyeu 22.

Comme dans les exemples précédents, l'axe central de la lame 23 correspond à l'axe de pas X-X de la pale 24, et la lame 23 présente une section transversale de forme sensiblement rectangulaire aplatie dans le plan de rotation du rotor, c'est-à-dire que sa largeur, perpendiculairement aux axes de pas X-X et du rotor A-A, est supérieure à son épaisseur, parallèlement à l'axe A-A.

Egalement comme dans les exemples précédents, chaque bras 25 est entouré d'une manchette 27 rigide en torsion, qui est solidaire en torsion par son extrémité radiale externe 27a de l'extrémité correspondante du bras torsible 25 et du pied 26 de la pale 24, en étant également retenue par les broches 26a entre les bras 26b de la chape du pied de pale fourchu 26.

Sauf à son extrémité radiale externe 27a, la manchette 27, de forme générale tronconique de section transversale ovale ou oblongue et convergeant radialement vers l'extérieur, entoure sans contact le bras torsible 25.

Les grand et petit axes de la section transversale sensiblement ovale de la manchette 27 sont, comme dans les exemples précédents, orientés selon respectivement la largeur et la hauteur de la section transversale de la lame 23, c'est-à-dire parallèles respectivement à l'axe fictif de battement et à l'axe fictif de traînée, en position de repos, l'axe central de la manchette 27 étant alors confondu avec celui de la lame 23. A son extrémité radiale interne, la partie interne 27b de la manchette 27 porte un levier de pas 28, en saillie latéralement vers l'extérieur de la manchette 27, du côté du bord d'attaque ou de fuite de la pale 24 correspondante. Ce levier de pas 28 est rapporté par boulonnage dans une chape latérale 27c de la partie interne de manchette 27b, et il est lui-même conformé en chape dans laquelle une rotule 29 d'articulation sur l'extrémité supérieure d'une bielle de commande de pas (non représentée) correspondante est articulée et retenue par un axe transversal. Comme dans l'exemple des figures 1 et 2, la rotule 29 est centrée sur le grand axe de la section transversale de l'extrémité radiale interne 27b de la manchette 27, c'est-à-dire sur ou à proximité de l'axe fictif de battement de la pale 24 correspondante.

La manchette 27 présente également, sous sa partie interne 27b, une chape 27d à deux branches parallèles l'une à l'autre et au plan médian de la manchette 27 passant par le petit axe de sa section transversale, et ces deux branches de chape 27d font saillie radialement vers l'axe A-A, en direction du moyeu 22 par rapport à l'extrémité radiale interne de la manchette 27 (voir figure 7).

Pour chaque pale 24, et de manière sensiblement symétrique par rapport à l'axe de pas X-X et à l'axe central de la manchette 27 correspondante, le moyeu 22 présente, en saillie au-dessus de son plateau supérieur 22b et simultanément en saillie radialement vers l'extérieur, une chape 22d à deux branches parallèles l'une à l'autre orientées radialement vers l'extérieur.

Comme dans les exemples précédents, un anneau intermédiaire 31, rigide en torsion autour de l'axe de pas X-X, est disposé, sans contact au repos, autour de la partie de lame 23 du bras torsible 25 qui s'étend entre le moyeu 22 et l'extrémité radiale interne de la manchette 27 correspondante. Cet anneau 31, de section transversale ovale ou oblongue, dont les grand et petit axes sont, au repos, orientés parallèlement respectivement aux grands et petits axes de la section transversale de la manchette 27 comme de la lame 23, supporte deux pattes radialement en saillie vers l'extérieur, et dont l'une 31a est dirigée vers le dessus de l'anneau 31, et l'autre 31b vers le dessous de cet anneau. Ces deux pattes arrondies 31a et 31b sont centrées à la fois sur le petit axe de la section transversale de l'anneau 31 et dans le plan médian de cet anneau 31, perpendiculairement à son axe central. Une rotule 32 montée dans la patte supérieure 31a est retenue par un axe transversal 22e entre les deux branches de la chape 22d correspondante du moyeu 22, pour articuler l'anneau intermédiaire 31 sur ce dernier. Symétriquement, en position diamétralement opposée sur l'anneau 31, une rotule 33 montée dans la patte inférieure 31b de cet anneau est retenue par un axe transversal 27e entre les deux branches de la chape 27d en saillie sous la manchette 27 correspondante, pour articuler l'anneau 31 sur cette manchette 27.

Comme dans l'exemple des figures 1 et 2, les deux rotules 32 et 33 sont identiques, et permettent chacune un débattement angulaire maximum limité des pivotements relatifs de la manchette 27 sur l'anneau 31 pour la rotule 33 et de l'anneau 31 sur le moyeu 22 pour la rotule 32, qui est le même et légèrement supérieur à la moitié de la plage totale de pas de la pale 24 correspondante. La figure 10 représente les positions relatives de la lame 23, de la manchette 27 et de l'anneau 31, lorsqu'une traction exercée sur la bielle de commande de pas correspondante (non représentée) fait pivoter le levier de pas 28 vers le bas en entraînant la manchette 27 avec lui en rotation par rapport à l'anneau 31, grâce au débattement angulaire permis par la rotule 33 dans la chape 27d, en même temps que l'anneau 31 pivote dans le même sens, mais avec une amplitude moitié, grâce au débattement de la rotule 32 dans la chape 22d du moyeu 22. La figure 10 montre également que le centre de la manchette 27 reste sensiblement sur le centre de la lame 23, alors que le centre de l'anneau intermédiaire 31 subit de légers déplacements en battement et en traînée, pour les mêmes raisons que celles déjà mentionnées ci-dessus pour l'exemple des figures 1 et 2.

Sur le rotor des figures 6 à 10, le fonctionnement du dispositif de commande de pas, dont la structure vient d'être décrite, est d'ailleurs identique à celui expliqué en référence aux figures 1 à 4.

Toutefois, dans cet exemple, l'amortissement en traînée de chaque pale 24 est assuré, de manière connue, par un amortisseur de traînée 35, allongé et de toute structure appropriée, et monté entre l'extrémité radiale externe 27a de la manchette 27 et le moyeu 22.

Plus précisément, une extrémité du corps allongé 36 de l'amortisseur 35 est articulée par une rotule en 38 latéralement sur la partie d'extrémité externe 27a de la manchette 27, du côté opposé au levier de pas 28, tandis que l'extrémité libre de la tige 37 de l'amortisseur 35 est articulée par une rotule 39 sur un support 40 en saillie sensiblement radiale vers l'extérieur sur la périphérie du moyeu 22, sur lequel ce support 40 est fixé par l'une des liaisons boulonnées 22c solidarisant les plateaux de moyeu 22a et 22b. Ce support 40 fait saillie entre l'anneau intermédiaire 31 prévu pour la pale correspondante et l'anneau 31 pour une pale 24 adjacente. De préférence, les rotules 38 et 39 sont centrées dans le plan de rotation du rotor, la rotule 39 comme la rotule 29 étant également centrée sur ou à proximité de l'axe de battement de la pale 24 correspondante, tandis que les rotules 32 et 33 sont centrées, au repos, sur ou à proximité de l'axe fictif de traînée correspondant. Dans cet exemple, l'amortisseur de traînée 35 n'est donc pas associé à un second anneau intermédiaire, comme sur la figure 5, mais s'étend sensiblement le long de la manchette 37, latéralement du côté opposé au levier de pas 28.

Dans les différents exemples décrits ci-dessus, la rotule 9 ou 29 d'articulation de la manchette 7 ou 27 sur la bielle de pas 10 est centrée sur le grand axe de la section ovale de l'anneau 11 ou 31, c'est-à-dire sensiblement sur ou à proximité de l'axe de battement B-B de la pale 4 ou 24, et les rotules 12 et 13 ou 32 et 33 d'articulation de l'anneau 11 ou 31 respectivement sur le moyeu 2 ou 22 et sur la manchette 7 ou 27 sont centrées sur le petit axe de cette section ovale, c'est-à-dire sensiblement sur ou à proximité de l'axe de traînée T-T de la pale 4 ou 24.

Cependant une optimisation, en fonction des besoins, ou une minimisation des couplages pas/traînée, pas/battement et battement/traînée peut être obtenue par une disposition appropriée des rotules 9 ou 29, 12 ou 32 et 13 ou 33.

En particulier, comme représenté schématiquement sur la figure 11, qui correspond à une variante de la figure 2, les rotules 12' et 13' articulant l'anneau 11 respectivement sur le moyeu 2 et sur la manchette 7 ne sont plus centrées sur le petit axe de la section ovale de l'anneau 11, correspondant à l'axe de traînée T-T, mais sont centrées l'une d'un côté et l'autre de l'autre côté du petit axe de cette section ovale, sensiblement à une même distance de ce petit axe, donc de part et d'autre de l'axe de traînée T-T.

Dans cette configuration, on obtient un effet stabilisateur, car le pas de la pale 4 correspondante augmente si cette pale 4 recule par rotation autour de son axe de traînée T-T, et par rapport au sens de rotation du rotor, et, inversement, le pas diminue si la pale 4 avance autour de l'axe T-T. Or, on sait que la pale 4 avance en même temps qu'elle monte, par rotation autour de son axe de battement B-B (dans le sens l'éloignant du mât rotor 1), et inversement qu'elle recule en même temps qu'elle descend par rotation autour de l'axe B-B dans le sens la rapprochant du mât 1, ce qui génère des oscillations de traînée permanente.

Le rôle des amortisseurs de traînée, tels que 15 et 35 des exemples des figures 5 et 6 à 10, est précisément d'atténuer ces oscillations de traînée. Mais, dans la configuration de la figure 11, on constate que le recul de la pale 4 peut être réduit lorsqu'elle descend, car lors du recul son pas augmente, ce qui augmente la portance, et réduit en conséquence la descente de la pale. Il en résulte que l'effet stabilisateur procuré par la configuration de la figure 11 permet de diminuer l'importance de l'amortisseur de traînée 15 ou 35, et éventuellement de le supprimer si d'autres moyens connus sont mis en jeu pour contrôler les mouvements de traînée des pales du rotor.

Dans les différents exemples décrits ci-dessus, les rotules d'articulation du ou des anneaux intermédiaires, telles que les rotules 12, 13, 18, 19 et 32 et 33 peuvent être des rotules standard. Cependant, il est avantageux d'utiliser des rotules du type de celles commercialisées par la société britannique AMPEP PLC, de Clevedon, AVON, qui sont des rotules auto-lubrifiantes connues sous la marque déposée FIBERSLIP, dont le revêtement est constitué d'un matériau à faible coefficient de frottement, tel que du PTFE, en fils tissés sur une couche de support en tissu de fibres de verre imprégné d'une résine phénolique.

## Revendications

1. Rotor du type dit "sans articulation", comprenant:
- un mât rotor (1, 21) entraîné en rotation autour d'un axe du rotor (A-A),
- un moyeu (2, 22) solidaire en rotation du mât (1, 21),
- au moins deux pales (4, 24) dont chacune est, d'une part, reliée au moyeu (2, 22) par une partie d'emplanture comprenant au moins un bras (5, 25) torsible autour d'un axe (X-X) longitudinal de changement de pas de la pale (4, 24), et, d'autre part, munie d'une manchette (7, 27) rigide en torsion, entourant le bras torsible (5, 25), et dont la partie radiale externe, par rapport à l'axe rotor (A-A), est solidaire en torsion de la pale (4, 24) et du bras torsible (5, 25) autour de l'axe de pas (X-X), tandis que sa partie radiale interne entoure sans contact le bras torsible (5, 25) et présente un levier de pas (8, 28) en saillie vers l'extérieur de la manchette, et relié à une bielle de commande de pas (10), caractérisé en ce qu'il comprend, pour chaque pale (4, 24), un anneau intermédiaire (11, 31) de commande de pas, qui est rigide en torsion autour de l'axe de pas (X-X) correspondant, qui entoure le bras torsible (5, 25) correspondant et qui est disposé sensiblement entre le moyeu (2, 22) et la partie radiale interne de la manchette (7, 27) correspondante, auxquels l'anneau (11, 31) est relié par deux rotules dont une première (12, 32) l'articule sur le moyeu (2, 22) et la seconde (13, 33) l'articule sur la manchette (7, 27).

2. Rotor selon la revendication 1, caractérisé en ce que le plan médian de l'anneau (11, 31), perpendiculairement à son axe, est sensiblement perpendiculaire à l'axe de pas (X-X) de la pale (4, 24) correspondante.

3. Rotor selon l'une des revendications 1 et 2, caractérisé en ce que chacune des deux rotules (12, 13 ; 32, 33) est retenue sur l'anneau (11, 31) dans l'une respectivement de deux positions sensiblement opposées l'une de l'autre par rapport au centre de l'anneau (11, 31).

4. Rotor selon la revendication 3, dont chaque bras torsible (5, 25) a sensiblement la forme d'une lame (3, 23) de section transversale dont la plus grande dimension est sensiblement perpendiculaire aux axes du rotor (A-A) et de pas (X-X) de la pale (4, 24) correspondante, caractérisé en ce qu'au moins la partie radiale interne de la manchette (7, 27) correspondante et l'anneau intermédiaire correspondant (11, 31) présentent chacun une section transversale sensiblement ovale à grand axe sensiblement perpendiculaire aux axes du rotor (A-A) et de pas (X-X) correspondant.

5. Rotor selon la revendication 4, caractérisé en ce que la bielle de commande de pas (10) est articulée sur une extrémité du levier de pas (8, 28) qui est en saillie latérale par rapport à une extrémité du grand axe de la section transversale de la manchette (7, 27) dans sa partie radiale interne.

6. Rotor selon l'une quelconque des revendications 1 à 5, caractérisé en ce que la bielle de commande de pas (10) est articulée sur le levier de pas (8, 28) par une troisième rotule (9, 29), centrée sensiblement dans le plan rotor, passant par l'axe de pas (X-X) et perpendiculaire à l'axe rotor (A-A).

7. Rotor selon l'une quelconque des revendications 1 à 6, caractérisé en ce que l'anneau intermédiaire (31) porte deux pattes (31a, 31b) en saillie sensiblement radiales vers l'extérieur de l'anneau dans deux directions opposées, et dans chacune desquelles est montée l'une respectivement des deux rotules (32, 33) de liaison de l'anneau (31), les deux rotules (32, 33) étant centrées sensiblement dans le plan médian de l'anneau (31) et retenues chacune par un axe transversal, la première dans une chape (22d) en saillie radiale latérale au-dessus du moyeu (22), et la seconde dans une chape (27d) en saillie sous la manchette (27).

8. Rotor selon l'une quelconque des revendications 1 à 7, caractérisé en ce que chaque rotule (12, 13 ; 32, 33) de liaison de l'anneau (11, 31) autorise un débattement angulaire maximum limité des pivotements relatifs des deux organes qu'elle articule l'un sur l'autre, la somme des débattements angulaires maximum des deux rotules de liaison (12, 13 ; 32, 33) étant au moins égale à l'amplitude de la plage totale de pas.

9. Rotor selon la revendication 8, caractérisé en ce que ledit débattement angulaire maximum limité de chaque rotule de liaison (12, 13 ; 32, 33) est sensiblement égal à la moitié de l'amplitude de la plage totale de pas.

10. Rotor selon l'une quelconque des revendications 1 à 9, caractérisé en ce qu'il comprend, pour chaque pale (4), un second anneau intermédiaire (14), également rigide en torsion autour de l'axe de pas (X-X) correspondant, et qui entoure également le bras torsible (5) correspondant et est disposé entre le moyeu (2) et la manchette (7) correspondante, le second anneau (14) étant solidaire d'au moins un amortisseur de trainée (15) de la pale (4) correspondante dans un ensemble articulé d'une part, par une quatrième rotule (18), sur la manchette (7) correspondante, et, d'autre part, par une cinquième rotule (19) sur un point d'appui (20), les quatrième et cinquième rotules (18, 19) étant sensiblement centrées dans le plan rotor, passant par l'axe de pas (X-X) et perpendiculaire à l'axe rotor (A-A).

11. Rotor selon la revendication 10, caractérisé en ce que ledit point d'appui (20) est un point fixe en repère tournant, sur le moyeu (2) ou le mât rotor (1).

12. Rotor selon la revendication 10, caractérisé en ce que ledit point d'appui (20) est un point fixe sur la manchette (7) d'une autre pale (4) du rotor, en particulier une pale (4) voisine.

13. Rotor selon l'une quelconque des revendications 10 à 12, caractérisé en ce que le second anneau (14) a son axe sensiblement parallèle au plan rotor et son plan médian, perpendiculairement à son axe, qui est disposé sensiblement parallèlement au plan médian de l'anneau intermédiaire (11) relié au moyeu (2) et à la manchette (7) correspondante.

14. Rotor selon l'une quelconque des revendications 10 à 13, caractérisé en ce que ledit ensemble articulé comprend un unique amortisseur (15) de trainée, latéralement solidaire du second anneau (14), qui est directement articulé sur la manchette (7) par la quatrième rotule (18), tandis que l'amortisseur (15) est directement articulé sur ledit point d'appui (20) par la cinquième rotule (19), du côté opposé à la quatrième rotule (18) par rapport au centre du second anneau (14) et à sa liaison à l'amortisseur (15).

15. Rotor selon l'une quelconque des revendications 10 à 14, dont chaque bras torsible (5) a sensiblement la forme d'une lame (3) de section transversale dont la plus grande dimension est sensiblement perpendiculaire aux axes du rotor (A-A) et de pas (X-X) correspondant, caractérisé en ce que le second anneau (14) a une section transversale sensiblement ovale, à grand axe sensiblement perpendiculaire aux axes du rotor (A-A) et de pas (X-X) correspondant, et sur lequel sont sensiblement centrées les quatrième et cinquième rotules (18, 19).

16. Rotor selon l'une quelconque des revendications 1 à 15, dans lequel, pour chaque pale (4, 24), le bras torsible (5, 25) est également flexible en battement autour d'un axe fictif de battement sensiblement perpendiculaire à l'axe de pas (X-X) correspondant et à l'axe rotor (A-A), caractérisé en ce que les première et seconde rotules (12, 32 ; 13, 33 ; 9, 29), ainsi, le cas échéant, que les troisième quatrième et cinquième rotules (18, 19) sont centrées sensiblement dans ou à proximité d'un plan perpendiculaire à l'axe de pas (X-X) correspondant et passant par ledit axe de battement.

17. Rotor selon l'une quelconque des revendications 1 à 16, dans lequel, pour chaque pale (4, 24), le bras torsible (5, 25) est également flexible en traînée autour d'un axe fictif de traînée (T-T) sensiblement perpendiculaire à l'axe de pas (X-X) correspondant et sensiblement parallèle à l'axe rotor (A-A), caractérisé en ce que les première et seconde rotules (12, 32 ; 13, 33) de liaison de l'anneau intermédiaire (11 ; 31) sont centrées sensiblement sur ou à proximité de l'axe de traînée (T-T).

18. Rotor selon l'une quelconque des revendications 1 à 16, dans lequel, pour chaque pale (4), le bras torsible (5) est également flexible en traînée autour d'un axe fictif de traînée (T-T) sensiblement perpendiculaire à l'axe de pas (X-X) correspondant et sensiblement parallèle à l'axe rotor (A-A), caractérisé en ce que les première et seconde rotules (12' ; 13') de liaison de l'anneau intermédiaire (11 ; 31) sont centrées de part et d'autre de l'axe de traînée (T-T), sensiblement à une même distance de cet axe.

## Claims

1. Rotor of the so-called "hingeless" type, comprising:
- a rotor mast (1,21) driven in rotation about an axis of the rotor (A-A),
- a hub (2,22) secured in terms of rotation to the mast (1,21),
- at least two blades (4,24), each of which is, on the one hand, joined to the hub (2,22) by a root attachment part comprising at least one arm (5,25) which can twist about a longitudinal pitch-change axis (X-X) of the blade (4,24) and, on the other hand, equipped with a cuff (7,27) which is rigid in torsion, surrounding the twistable arm (5,25), and of which the radially external part, with respect to the rotor axis (A-A) is secured in terms of torsion to the blade (4,24) and to the twistable arm (5,25)about the pitch axis (X-X), while its radially internal part surrounds, without contact, the twistable arm (5,25) and exhibits a pitch lever (8,28) projecting towards the outside of the cuff and joined to a pitch-control rod (10), characterised in that it includes, for each blade (4,24), an intermediate pitch-control ring (11,31) which is rigid in terms of torsion about the corresponding pitch axis (X-X), and which surrounds the corresponding twistable arm (5,25) and is arranged substantially between the hub (2,22) and the radially internal part of the corresponding cuff (7,27), to which elements the ring (11,31) is joined by two ball joints, a first one (12,32) of which articulates it to the hub (2,22) and the second (13,33) of which articulates it to the cuff (7,27).

2. Rotor according to Claim 1, characterised in that the mid-plane of the ring (11,31), perpendicular to its axis, is substantially perpendicular to the pitch axis (X-X) of the corresponding blade (4,24).

3. Rotor according to any one of Claims 1 and 2, characterised in that each of the two ball joints (12,13 ; 32,33) is held on the ring (11,31) in respectively one of two positions which are substantially opposite one another with respect to the centre of the ring (11,31).

4. Rotor according to Claim 3, in which each twistable arm (5,25) has substantially the shape of a thin strip (3,23) with transverse section whose longest dimension is substantially perpendicular to the axis of the rotor (A-A) and pitch axis (X-X) of the corresponding blade (4,24), characterised in that at least the radially internal part of the corresponding cuff (7,27) and the corresponding intermediate ring (11,31) each exhibit a substantially oval transverse section with their major axis substantially perpendicular to the axis of the rotor (A-A) and corresponding pitch axis (X-X).

5. Rotor according to Claim 4, characterised in that the pitch-control rod (10) is articulated to one end of the pitch lever (8,28) which projects laterally with respect to one end of the major axis of the transverse section of the cuff (7,27) in its radially internal part.

6. Rotor according to any one of Claims 1 to 5, characterised in that the pitch-control rod (10) is articulated to the pitch lever (8,28) by a third ball joint (9,29) centred substantially in the rotor plane, passing through the pitch axis (X-X) and perpendicular to the rotor axis (A-A).

7. Rotor according to any one of Claims 1 to 6, characterised in that the intermediate ring (31) bears two substantially radial lugs (31a,31b) projecting towards the outside of the ring in two opposite directions, and in each of which there is mounted respectively one of the two ball joints (32,33) for linking of the ring (31), the two ball joints (32,33) being centred substantially in the mid-plane of the ring (31) and each held by a transverse pin, the first in a clevis (22d) projecting laterally and radially above the hub (22), and the second in a clevis (27d) projecting under the cuff (27).

8. Rotor according to any one of Claims 1 to 7, characterised in that each ball joint (12,13 ; 32,33) for linking of the ring (11,31) allows a limited maximum angular travel for the relative pivoting of the two members which it articulates together, the sum of the maximum angular travels of the two linking ball joints (12,13 ; 32,33) being at least equal to the amplitude of the total pitch range.

9. Rotor according to Claim 8, characterised in that said limited maximum angular travel of each linking ball joint (12,13 ; 32,33) is substantially equal to half the amplitude of the total pitch range.

10. Rotor according to any one of Claims 1 to 9, characterised in that it comprises, for each blade (4), a second intermediate ring (14), which is also rigid in terms of torsion about the corresponding pitch axis (X-X) and which also surrounds the corresponding twistable arm (5) and is arranged between the hub (2) and the corresponding cuff (7), the second ring (14) being secured to at least one drag damper (15) of the corresponding blade (4) in an assembly which is articulated, on the one hand, by a fourth ball joint (18) to the corresponding cuff (7) and, on the other hand, by a fifth ball joint (19) to a fixing point (20), the fourth and fifth ball joints (18,19) being substantially centred in the rotor plane, passing through the pitch axis (X-X) and perpendicular to the rotor axis (A-A).

11. Rotor according to Claim 10, characterised in that said fixing point (20) is a point which is stationary in a rotating reference frame, on the hub (2) or on the rotor mast (1).

12. Rotor according to Claim 10, characterised in that said fixing point (20) is a point which is stationary on the cuff (7) of another blade (4) of the rotor, particularly a neighbouring blade (4).

13. Rotor according to any one of Claims 10 to 12, characterised in that the second ring (14) has its axis substantially parallel to the rotor plane and its mid-plane, perpendicular to its axis, which is arranged substantially parallel to the mid-plane of the intermediate ring (11) joined to the hub (2) and to the corresponding cuff (7).

14. Rotor according to any one of Claims 10 to 13, characterised in that said articulated assembly comprises a single drag damper (15) laterally secured to the second ring (14), which is articulated directly to the cuff (7) by the fourth ball joint (18), while the damper (15) is articulated directly to the said fixing point (20) by the fifth ball joint (19), on the opposite side from the fourth ball joint (18) with respect to the centre of the second ring (14) and its link with the damper (15).

15. Rotor according to any one of Claims 10 to 14, in which each twistable arm (5) has substantially the shape of a thin strip (3) of transverse section whose longest dimension is substantially perpendicular to the axis of the rotor (A-A) and the corresponding pitch axis (X-X), characterised in that the second ring (14) has a substantially oval transverse section with its major axis substantially perpendicular to the axis of the rotor (A-A) and the corresponding pitch axis (X-X), and on which the fourth and fifth ball joints are substantially centred (18,19).

16. Rotor according to any one of Claims 1 to 15, in which, for each blade (4,24), the twistable arm (5,25) is also flexible in terms of flapping about an imaginary axis of flapping substantially perpendicular to the corresponding pitch axis (X-X) and to the rotor axis (A-A), characterised in that the first and second ball joints (12,32 ; 13,33 ; 9,19) as well as possibly the third, fourth and fifth ball joints (18,19) are centred substantially in or close to a plane perpendicular to the corresponding pitch axis (X-X) and passing through the said axis of flapping.

17. Rotor according to any one of Claims 1 to 16, in which, for each blade (4,24), the twistable arm (5,25) is also flexible in terms of drag about an imaginary axis of drag (T-T) substantially perpendicular to the corresponding pitch axis (X-X) and substantially parallel to the rotor axis (A-A), characterised in that the first and second ball joints (12,32 ; 13,33) for linking of the intermediate ring (11 ; 31) are centred substantially on or close to the axis of drag (T-T).

18. Rotor according to any one of Claims 1 to 16, in which, for each blade (4), the twistable arm (5) is also flexible in terms of drag about an imaginary axis of drag (T-T) substantially perpendicular to the corresponding pitch axis (X-X) and substantially parallel to the rotor axis (A-A), characterised in that the first and second ball joints (12' ; 13') for linking of the intermediate ring (11 ; 31) are centred on either side of the axis of drag (T-T), substantially at equal distances from this axis.

## Patentansprüche

1. Rotor vom sogenannten "gelenklosen" Typ, umfassend:
- einen um eine Rotorachse (A-A) drehangetriebenen Rotormast (1, 21),
- eine mit dem Mast (1, 21) drehvereinte Nabe (2, 22),
- wenigstens zwei Blätter (4, 24), die jeweils einerseits mit der Nabe (2, 22) durch ein Wurzelstück, das wenigstens einen um eine Längsachse (X-X) zur Veränderung der Anstellung des Blattes (4, 24) verwindbaren Arm (5, 25) enthält, verbunden und andererseits mit einer verwindungssteifen Manschette (7, 27) versehen sind, die den verwindbaren Arm (5, 25) umgibt und deren äußerer radialer Teil in bezug auf die Rotorachse (A-A) mit dem Blatt (4, 24) und dem verwindbaren Arm (5,25) um die Anstellachse (X-X) verdrehungsvereint ist, wogegen ihr innerer radialer Teil berührungsfrei den verwindbaren Arm (5, 25) umgibt und einen von der Manschette nach außen abstehenden und mit einer Anstellsteuerstange (10) verbundenen Anstellhebel (8, 28) aufweist, dadurch gekennzeichnet, daß er für jedes Blatt (4, 24) einen Zwischenring (11, 31) zur Anstellsteuerung enthält, der um die entsprechende Anstellachse (X-X) verwindungssteif ist, der den entsprechenden verwindbaren Arm (5, 25) umgibt und der im wesentlichen zwischen der Nabe (2, 22) und dem inneren radialen Teil der entsprechenden Manschette (7, 27) angeordnet ist, mit denen der Ring (11, 31) durch zwei Kugelköpfe verbunden ist, von denen ein erster (12, 32) ihn gelenkig an der Nabe (2, 22) und der zweite (13, 33) ihn gelenkig an der Manschette (7, 27) anbringt.

2. Rotor nach Anspruch 1, **dadurch gekennzeichnet**, daß die senkrecht zu seiner Achse verlaufende Mittelebene des Ringes (11, 31) im wesentlichen senkrecht zur Anstellachse (X-X) des entsprechenden Blattes (4, 24) ist.

3. Rotor nach einem der Ansprüche 1 und 2, **dadurch gekennzeichnet**, daß jeder der beiden Kugelköpfe (12, 13; 32, 33) am Ring (11, 31) in jeweils einer von zwei in bezug auf die Mitte des Ringes (11, 31) im wesentlichen zueinander gegenüberliegenden Positionen gehalten ist.

4. Rotor nach Anspruch 3, wobei jeder verwindbare Arm (5, 25) im wesentlichen die Form einer Klinge (3, 23) von einem Querschnitt hat, dessen größere Abmessung im wesentlichen senkrecht zur Rotorachse (A-A) und zur Anstellachse (X-X) des entsprechenden Blattes (4, 24) verläuft, **dadurch gekennzeichnet**, daß wenigstens der innere radiale Teil der entsprechenden Manschette (7, 27) und der entsprechende Zwischenring (11, 31) jeweils einen im wesentlichen ovalen Querschnitt mit einer großen Achse aufweisen, die im wesentlichen senkrecht zur Rotorachse (A-A) und zur entsprechenden Anstellachse (X-X) verläuft.

5. Rotor nach Anspruch 4, **dadurch gekennzeichnet**, daß die Anstellsteuerstange (10) gelenkig an einem Ende des Anstellhebels (8, 28) angebracht ist, der seitlich in bezug auf ein Ende der großen Achse des Querschnitts der Manschette (7, 27) bei ihrem inneren radialen Teil absteht.

6. Rotor nach einem der Ansprüche 1 bis 5, **dadurch gekennzeichnet**, daß die Anstellsteuerstange (10) am Anstellhebel (8, 28) durch einen dritten Kugelkopf (9, 29) gelenkig angebracht ist, der im wesentlichen in der Rotorebene zentriert ist, die durch die Anstellachse (X-X) und senkrecht zur Rotorachse (A-A) verläuft.

7. Rotor nach einem der Ansprüche 1 bis 6, **dadurch gekennzeichnet**, daß der Zwischenring (31) zwei Lappen (31a, 31b) trägt, die im wesentlichen radial außen vom Ring in zwei entgegengesetzten Richtungen abstehen und in denen jeweils einer der beiden Kugelköpfe (32, 33) zur Verbindung des Ringes (31) angebracht ist, wobei die beiden Kugelköpfe (32, 33) im wesentlichen in der Mittelebene des Ringes (31) zentriert und jeweils durch eine Querachse gehalten sind und zwar der erste in einem radial seitlich oben von der Nabe (22) abstehenden Gabelkopf (22d) und der zweite in einem unter der Manschette (27) abstehenden Gabelkopf (27d).

8. Rotor nach einem der Ansprüche 1 bis 7, **dadurch gekennzeichnet**, daß jeder Kugelkopf (12, 13; 32, 33) zur Verbindung des Ringes (11, 31) einen begrenzten maximalen Winkelausschlag relativer Schwenkungen der beiden Organe zuläßt, die er miteinander gelenkig verbindet, wobei die Summe der maximalen Winkelausschläge der beiden Verbindungskugelköpfe (12, 13; 32, 33) zumindest gleich der Amplitude des gesamten Anstellbereiches ist.

9. Rotor nach Anspruch 8, **dadurch gekennzeichnet**, daß der begrenzte maximale Winkelausschlag jedes Verbindungskugelkopfes (12, 13; 32, 33) im wesentlichen gleich der Hälfte der Amplitude des gesamten Anstellbereiches ist.

10. Rotor nach einem der Ansprüche 1 bis 9, **dadurch gekennzeichnet**, daß er für jedes Blatt (4) einen zweiten Zwischenring (14) enthält, der um die entsprechende Anstellachse (X-X) auch verwindungssteif ist und den entsprechenden verwindbaren Arm (5) auch umgibt und zwischen der Nabe (2) und der entsprechenden Manschette (7) angeordnet ist, wobei der zweite Ring (14) mit wenigstens einem Widerstandsdämpfer (15) des entsprechenden Blattes (4) in einer Anordnung vereint ist, die einerseits durch einen vierten Kugelkopf (18) an der entsprechenden Manschette (7) und andererseits durch einen fünften Kugelkopf (19) an einem Abstützpunkt (20) gelenkig angebracht ist, wobei der vierte und fünfte Kugelkopf (18, 19) im wesentlichen in der Rotorebene zentriert sind, die durch die Anstellachse (X-X) und senkrecht zur Rotorachse (A-A) verläuft.

11. Rotor nach Anspruch 10, **dadurch gekennzeichnet**, daß der Abstützpunkt (20) ein fester, mit der Nabe (2) oder dem Rotormast (1) drehender Bezugspunkt ist.

12. Rotor nach Anspruch 10, **dadurch gekennzeichnet**, daß der Abstützpunkt (20) ein fester Punkt auf der Manschette (7) eines anderen Blattes (4) des Rotors, insbesondere eines benachbarten Blattes (4) ist.

13. Rotor nach einem der Ansprüche 10 bis 12, **dadurch gekennzeichnet**, daß der zweite Ring (14) seine Achse im wesentlichen parallel zur Rotorebene und seine Mittelebene senkrecht zu seiner Achse hat, die im wesentlichen parallel zur Mittelebene des mit der Nabe (2) und mit der entsprechenden Manschette (7) verbundenen Zwischenrings (11) angeordnet ist.

14. Rotor nach einem der Ansprüche 10 bis 13, **dadurch gekennzeichnet**, daß die genannte Anordnung einen einzigen Widerstandsdämpfer (15) enthält, der seitlich mit dem zweiten Ring (14) verbunden ist, der direkt an der Manschette (7) durch den vierten Kugelkopf (18) gelenkig angebracht ist, wogegen der Dämpfer (15) direkt am Abstützpunkt (20) durch den fünften Kugelkopf (19) an der zum vierten Kugelkopf (18) in bezug auf die Mitte des zweiten Ringes (14) und seiner Verbindung mit dem Dämpfer (15) gegenüberliegenden Seite gelenkig angebracht ist.

15. Rotor nach einem der Ansprüche 10 bis 14, wobei jeder verwindbare Arm (5) im wesentlichen die Form einer Klinge (3) mit einem Querschnitt hat, dessen größere Abmessung im wesentlichen senkrecht zur Rotorachse (A-A) und entsprechenden Anstellachse (X-X) ist, **dadurch gekennzeichnet**, daß der zweite Ring (14) einen im wesentlichen ovalen Querschnitt mit einer zur Rotorachse (A-A) und entsprechenden Anstellachse (X-X) im wesentlichen senkrecht verlaufenden großen Achse hat und an ihm der vierte und fünfte Kugelkopf (18, 19) im wesentlichen zentriert sind.

16. Rotor nach einem der Ansprüche 1 bis 15, bei dem für jedes Blatt (4, 24) der verwindbare Arm (5, 25) auch schlagnachgiebig um eine fiktive Schlagachse ist, die im wesentlichen senkrecht zur entsprechenden Anstellachse (X-X) und zur Rotorachse (A-A) ist, **dadurch gekennzeichnet**, daß der erste und zweite Kugelkopf (12, 32; 13, 33; 9, 29) sowie gegebenenfalls der dritte, vierte und fünfte Kugelkopf (18, 19) im wesentlichen in oder in der Nähe einer Ebene zentriert sind, die senkrecht zur entsprechenden Anstellachse (X-X) und durch die genannte Schlagachse verläuft.

17. Rotor nach einem der Ansprüche 1 bis 16, bei dem für jedes Blatt (4, 24) der verwindbare Arm (5, 25) auch widerstandsnachgiebig um eine fiktive Widerstandsachse (T-T) ist, die im wesentlichen senkrecht zur entsprechenden Anstellachse (X-X) und im wesentlichen parallel zur Rotorachse (A-A) ist, **dadurch gekennzeichnet**, daß der erste und zweite Kugelkopf (12, 32; 13, 33) zur Verbindung des Zwischenrings (11; 31) im wesentlichen an oder in der Nähe der Widerstandsachse (T-T) zentriert sind.

18. Rotor nach einem der Ansprüche 1 bis 16, bei dem für jedes Blatt (4) der verwindbare Arm (5) auch widerstandsnachgiebig um eine fiktive Widerstandsachse (T-T) ist, die im wesentlichen senkrecht zur entsprechenden Anstellachse (X-X) und im wesentlichen parallel zur Rotorachse (A-A) ist, **dadurch gekennzeichnet**, daß der erste und zweite Kugelkopf (12'; 13') zur Verbindung des Zwischenrings (11; 31) beiderseits der Widerstandsachse (T-T) im wesentlichen mit gleichem Abstand von dieser Achse zentriert sind.
